# EUROPÄISCHE PATENTANMELDUNG

(11) **EP 4 553 023 A1**
(43) Veröffentlichungstag der Anmeldung: **14.05.2025**
(21) Anmeldenummer: 23209356.7
(22) Anmeldetag: 13.11.2023
(51) Int. Cl.: B65H 31/30

(54) **VORRICHTUNG ZUM ANHEBEN UND BEWEGEN EINES STAPELS ÜBEREINANDER LIEGENDER FLACHER PRODUKTE**

(71) Anmelder: Heidelberger Druckmaschinen AG, 69115 Heidelberg (DE)
(72) Erfinder: Neeb, Steffen, 64625 Bensheim (DE); Demir, Suat, 69190 Walldorf (DE); Östreicher, Michael, 69214 Eppelheim (DE); Leonhardt, Holger, 74909 Meckesheim (DE); Maier, Stefan, 69234 Dielheim (DE); März, Ralf, 74918 Angelbachtal (DE); Knöbl, Dominik, 74918 Angelbachtal (DE)

(57) **Zusammenfassung**

Eine erfindungsgemäße Vorrichtung zum Anheben und Bewegen eines Stapels übereinander liegender flacher Produkte, z.B. Falzbogen, mit einer robotergeführten Greifeinrichtung (30) wobei die Greifeinrichtung (30) ein unteres Greifelement (31), ein oberes Greifelement (33) und einen Sensor (40) umfasst, zeichnet sich dadurch aus, dass das obere Greifelement (33) als Klemmelement ausgebildet ist, welches in Richtung zum unteren Greifelement (31) bewegbar ist, und dass der Sensor (40) als ein Abstandssensor (40) oder ein Näherungsschalter (40) ausgebildet ist, derart, dass unter Einsatz des Sensors (40) die Ist-Höhe (12) eines der Greifeinrichtung (30) gegriffenen und zwischen den Greifelementen (31, 33) geklemmten Stapels (10) bestimmt wird. Die Erfindung kommt bevorzugt der grafischen Industrie und insbesondere im Umfeld von Falzmaschinen bzw. deren Produktauslage zum Einsatz. Die Erfindung ermöglicht es in vorteilhafter Weise, Stapel übereinanderliegender flacher Produkte sicher zu ergreifen, robotergeführt zu transportieren und abzusetzen.

## Beschreibung

### Erfindung

Die Erfindung betrifft eine Vorrichtung zum Anheben und Bewegen eines Stapels übereinander liegender flacher Produkte mit den Merkmalen des Oberbegriffs von Anspruch 1.

### Gebiet der Technik

Die Erfindung liegt auf dem technischen Gebiet der grafischen Industrie und dort insbesondere im Bereich des Handhabens (z.B. Greifen, Halten, Bewegen, Drehen, Wenden und/oder Absetzen) von Stapeln aus übereinander liegenden, flexiblen und bevorzugt bedruckten und gefalzten flachen Produkten wie z.B. Falzbogen, bevorzugt aus Papier, Karton, Pappe, Kunststoff oder Verbundmaterial, mit einem Manipulator, insbesondere einem Gelenkarmroboter/Knickarmroboter mit Roboterarm und Greifereinrichtung für die Stapel.

### Stand der Technik

Es ist im Bereich der Druckweiterverarbeitung (Postpress) bereits bekannt, Stapel von flächigen Produkten auf einer (z.B. Rollen-) Förderstrecke zu transportieren, die Stapel mittels eines an einem Roboterarm angeordneten Greiferkopfes zu erfassen, von der Förderstrecke abzuheben, zu einer in der Nähe der Förderstrecke befindlichen Palette zu bewegen und dort zu einem Palettenstapel abzusetzen, z.B. aus der DE102020103398A1 oder aus der DE202019106975U1.

Die DE202019106975U1 offenbart eine Förderstrecke für Stapel übereinanderliegender Druckprodukte und ein sogenanntes kollaboratives Robotersystem mit einem Roboterarm samt Greifer zum Aufnehmen der Stapel von der Förderstrecke und zum Absetzen der Stapel auf Paletten.

Die DE102020103398A1 offenbart ebenfalls eine Förderstrecke für Stapel übereinanderliegender Druckprodukte und einen Roboter mit einem Roboterarm samt Greifer zum Aufnehmen der Stapel von der Förderstrecke und zum Absetzen der Stapel auf Paletten. Der Roboter kann dabei als industrieller Gelenkarmroboter ausgebildet sein.

Die FR3110152B1 offenbart ebenfalls eine Förderstrecke und einen robotergeführten Greiferkopf. Der Greiferkopf umfasst dabei ein vertikal bewegliches oberes Greifelement, welches als Klemmelement aufgeführt ist, und ein horizontal bewegliches unteres Greifelement, welches als ein Paar von Zinken ausgeführt ist.

Die DE69420616T2 offenbart ein Absetzsystem zum Absetzen von Stapeln auf Paletten mit einem Portalroboter und einem Greifwerkzeug. Das Greifwerkzeug umfasst dabei ein saugendes oberes Greifelement und ein schwenkbares unteres Greifelement. Am Greifwerkzeug ist zudem ein Sensor angebracht. Dieser detektiert die horizontale Position des Stapels im Greifwerkzeug.

Beim Ausgeben von Stapeln übereinanderliegender flacher Produkte, zum Beispiel aus einer Falzmaschine, kann es vorkommen, dass nicht alle Stapel die gleiche Höhe aufweisen bzw. dass manche Stapel weniger flacher Produkte umfassen. Dies kann zum Beispiel ein letzter Stapel eines Produktionsauftrags sein. Ein solcher Stapel kann zum Beispiel eine zu geringe Höhe aufweisen, um von einem robotergeführten Greiferkopf sicher transportiert und abgesetzt zu werden.

### Technische Aufgabe

Es ist daher eine Aufgabe der vorliegenden Erfindung, eine Verbesserung gegenüber dem Stand der Technik zu schaffen, welche es insbesondere ermöglicht, Stapel übereinanderliegender flacher Produkte sicher zu ergreifen, robotergeführt zu transportieren und abzusetzen.

### Erfindungsgemäße Lösung der Aufgabe

Diese Aufgabe wird erfindungsgemäß durch ein Verfahren nach Anspruch 1 gelöst.

Vorteilhafte und daher bevorzugte Weiterbildungen der Erfindung ergeben sich aus den Unteransprüchen sowie aus der Beschreibung und den Zeichnungen.

Eine erfindungsgemäße Vorrichtung zum Anheben und Bewegen eines Stapels übereinander liegender flacher Produkte, mit einer robotergeführten Greifeinrichtung wobei die Greifeinrichtung ein unteres Greifelement, ein oberes Greifelement und einen Sensor umfasst, zeichnet sich dadurch aus, dass das obere Greifelement als Klemmelement ausgebildet ist, welches in Richtung zum unteren Greifelement bewegbar ist, und dass der Sensor als ein Abstandssensor oder ein Näherungsschalter ausgebildet ist, derart, dass unter Einsatz des Sensors die Ist-Höhe eines der Greifeinrichtung gegriffenen und zwischen den Greifelementen geklemmten Stapels bestimmt wird.

### Vorteilhafte Ausbildungen und Wirkungen der Erfindung

Die Erfindung ermöglicht es in vorteilhafter Weise, Stapel übereinanderliegender flacher Produkte sicher zu ergreifen, robotergeführt zu transportieren und abzusetzen.

Die Erfindung kommt bevorzugt der grafischen Industrie und insbesondere im Umfeld von Falzmaschinen bzw. deren Produktauslage zum Einsatz.

Die Erfindung erlaubt es in vorteilhafter Weise, die Höhe eines mit einem Roboterarm und einem Greiferkopf zu transportierenden Stapels übereinanderliegender flacher Produkte direkt zu messen und daher auch direkt entscheiden zu können, ob der betreffende Stapel sicher gehandhabt werden kann. Probleme beim Transport und insbesondere beim Absetzen des Stapels können auf diese Weise verhindert werden.

Die Erfindung hat zudem den Vorteil, dass die Höhe eines Stapels übereinanderliegender flacher Produkte im geklemmten Zustand erfasst und dadurch vermieden werden kann, dass der Stapel beim Erfassen seiner Höhe aufgefächert und dadurch die Messung verfälscht.

Der Roboterarm ist bevorzugt Teil eines Robotersystems, welches meist auch eine Roboterbasis umfasst und welches als ein üblicher Industrieroboter samt Einzäunung zum Bedienerschutz, insbesondere als Gelenkarmroboter mit drei bis sieben Rotationsachsen, oder als ein sogenanntes kollaboratives Robotersystem, insbesondere als ein sogenannter Cobot, ausgebildet sein kann. Letzteres benötigt keine Einzäunung, da das System über eine eigene Kraft-Sensorik verfügt und mittels dieser Berührungen mit Bedienpersonal erfasst und mögliche Verletzungen z.B. durch einen automatischen Stopp der Roboterarmbewegung verhindert. Ein kollaboratives Robotersystem kann alternativ zum Cobot auch durch einen Industrieroboter mit zusätzlichem Bereichsscanner (Erfassung von Bedienpersonal im Gefahrenbereich) und mit einer Stoppautomatik verwirklicht werden.

### Weiterbildungen der Erfindung

Im Folgenden werden bevorzugte Weiterbildungen der Erfindung (kurz: Weiterbildungen) beschrieben. Diese können - wo es sich nicht technisch ausschließt - auch untereinander kombiniert werden.

Eine Weiterbildung kann sich dadurch auszeichnen, dass der Sensor als Abstandssensor ausgebildet ist, an der Greifeinrichtung über einem gegriffenen Stapel angeordnet ist und einen Abstand bestimmt. Eine Weiterbildung kann sich dadurch auszeichnen, dass der Abstandssensor einen Abstand zu einer (nach oben weisenden) Oberfläche des Stapels misst. Eine Weiterbildung kann sich dadurch auszeichnen, dass der Abstandssensor einen Abstand zu einer (nach oben weisenden) Oberfläche des Klemmelements oder einer Klemmfläche des Klemmelements misst. Der Abstandssensor kann bevorzugt als ein Laser-Triangulationssensor oder als ein Ultraschallsensor ausgebildet sein.

Eine Weiterbildung kann sich dadurch auszeichnen, dass das obere Greifelement einen Linearantrieb umfasst, dass der Linearantrieb oder dessen Steuerung als der Abstandssensor eingesetzt wird und dass der Linearantrieb oder dessen Steuerung einen Abstand bestimmt. Der Linearantrieb umfasst bevorzugt wenigstes eine pneumatisch betätigte Teleskopstange, z.B. zwei solche Stangen im Paralleleinsatz.

Eine Weiterbildung kann sich dadurch auszeichnen, dass der Abstandssensor den Abstand an einen Rechner übermittelt und dass der Rechner aus dem Abstand die Ist-Höhe des Stapel berechnet. Eine Weiterbildung kann sich dadurch auszeichnen, dass die Ist-Höhe mit einer Soll-Höhe des Stapels auf eine Abweichung verglichen wird. Eine Weiterbildung kann sich dadurch auszeichnen, dass erfasst wird, ob die Ist-Höhe geringer als eine vorgegebene Minimalhöhe des Stapels ist; auch dies kann bevorzugt als eine Abweichung erkannt werden.

Eine Weiterbildung kann sich dadurch auszeichnen, dass der Rechner aus der Ist-Höhe das Ist-Gewicht des Stapels berechnet. Eine Weiterbildung kann sich dadurch auszeichnen, dass der Rechner das Ist-Gewicht an eine Steuereinrichtung des Roboters übermittelt und die Steuereinrichtung das Ist-Gewicht bei der Ausführung von Roboterbewegungen berücksichtigt. Die Kenntnis des Ist-Gewichts ist beim robotergeführten Transportieren von Produkten außerordentlich wichtig, insbesondere beim Einsatz sogenannter Cobots.

Eine Weiterbildung kann sich dadurch auszeichnen, dass der Sensor als Näherungsschalter ausgebildet ist und an der Greifeinrichtung neben einem gegriffenen Stapel angeordnet ist. Eine Weiterbildung kann sich dadurch auszeichnen, dass der Näherungsschalter infolge seiner Positionierung (in der Vertikalen) erfasst, ob die Ist-Höhe geringer als eine vorgegebene Minimalhöhe des Stapels ist. Eine Weiterbildung kann sich dadurch auszeichnen, dass der Näherungsschalter ein Signal an einen Rechner übermittelt und der Rechner daraus eine vorhandene Abweichung feststellt. Der Näherungsschalter kann zum Beispiel ein induktiver, kapazitiver oder optischer Schalter sein; alternativ eine Lichtschranke oder ein Endlagenschalter.

Eine Weiterbildung kann sich dadurch auszeichnen, dass in Abhängigkeit einer vorhandenen (erkannten) Abweichung eine vorgegebene Störungswarnung, z.B. optisch oder akustisch ausgegeben oder ein vorgegebener Störungsmodus, z.B. ein Stopp, aktiviert wird.

Eine Weiterbildung kann sich dadurch auszeichnen, dass der Sensor das Ergebnis seiner Messung drahtlos an den Rechner übermittelt. Dies ist insbesondere beim robotergeführten Transportieren von Vorteil, da auf diese Weise vermieden werden kann, Leitungen durch den Roboterarm oder entlang des Roboterarms führen zu müssen.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Alternativen

Alternativ zur genannten Erfindung könnte vorgesehen werden, die Höhe eines Stapels übereinanderliegender flacher Produkte bereits vor der Aufnahme durch den Greiferkopf zu erfassen, insbesondere bereits auf einer Förderstrecke zwischen einer vorgelagerten Maschine, zum Beispiel einer Falzmaschine, und der Aufnahmeposition für den Greiferkopf.

### Ausführungsbeispiele zur Erfindung und Figuren

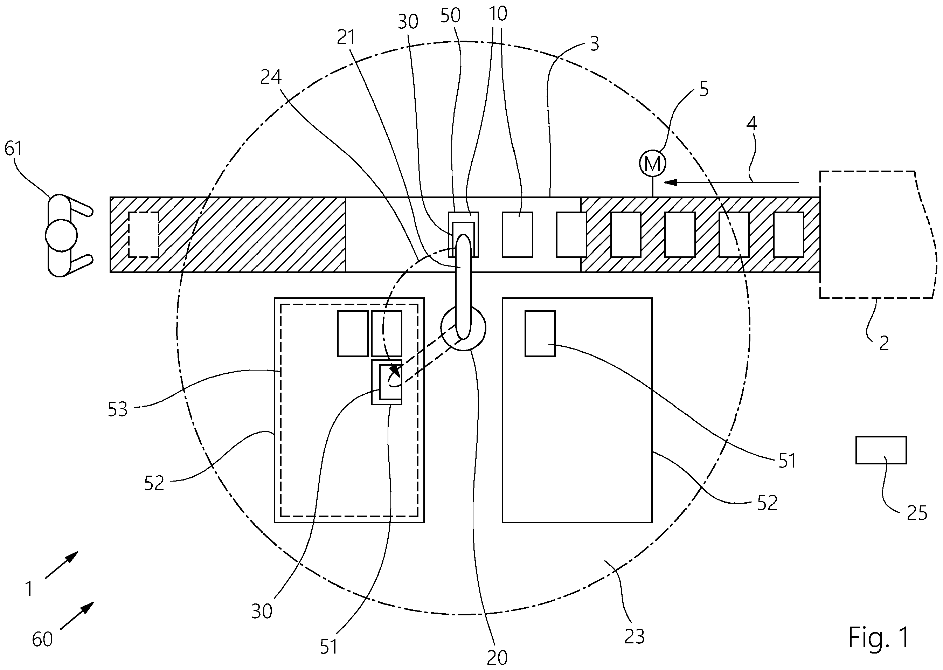

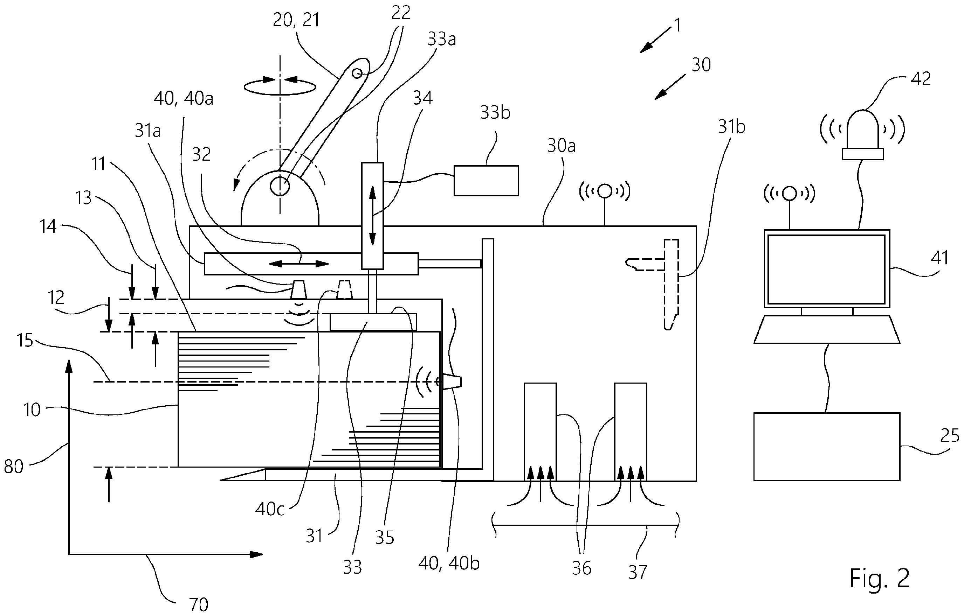

Die Figuren 1 und 2 zeigen ein bevorzugtes Ausführungsbeispiel der Erfindung und der Weiterbildungen. Einander entsprechende Merkmale sind in den Figuren mit denselben Bezugszeichen versehen.
Figur 1 zeigt eine schematische Darstellung einer Draufsicht einer bevorzugten Ausführungsform einer erfindungsgemäßen Vorrichtung.
Figur 2 zeigt eine schematische Darstellung einer Schnittansicht durch eine bevorzugte Ausführungsform einer erfindungsgemäßen Vorrichtung.

Figur 1 zeigt ausschnittsweise eine Maschine 2 der grafischen Industrie, bevorzugt eine Weiterverarbeitungsmaschine 2 und insbesondere eine Falzmaschine 2, und eine der Maschine 2 nachgeordnete, bevorzugt lineare Förderstrecke 3, zum Beispiel ein Rollentisch 3 mit Transportrollen, mit einer Förderrichtung 4 und einem Motor 5 zum bevorzugt horizontalen Fördern von aufeinanderfolgenden Stapeln 10 übereinanderliegender Produkte, zum Beispiel bedruckter und gefalzter Papierbogen.

Weiterhin zeigt Figur 1 eine erfindungsgemäße Vorrichtung 1 zum Umsetzen der Stapel 10, insbesondere zum Absetzen der Stapel 10 auf Paletten 52. Die Vorrichtung umfasst einen Roboter 20 mit einem beweglichen Roboterarm 21, zum Beispiel einem Gelenkarm 21, an welchem eine Greifeinrichtung 30 zum Ergreifen einzelner Stapel 10 angeordnet ist. Ein Gefahrenbereich 23 ist durch die maximalen Bewegungen des Roboterarms 21 definiert. Die Greifeinrichtung 30 ergreift jeweils einen Stapel 10, hebt diesen von der Förderstrecke 3 ab und hält den Stapel 10 während der Roboterbewegung 24 zu einer Palette 52. Die von der Maschine 2 weggeförderten Stapel 10 werden auf diese Weise nacheinander auf der Palette 52 abgesetzt und bilden dort (nebeneinander und übereinander entsprechend einem vorgegebenen Absetzschema angeordnet) einen Palettenstapel 53. Die Stapel 10 einer oberen (und bevorzugt vollständigen) Ebene bilden eine Oberkante des Palettenstapels 53. In Figur 1 sind beispielhaft zwei Paletten 52 an einer Längsseite der Förderstrecke 3 platziert. Auch der Roboter 20 ist beispielhaft an der Längsseite der Förderstrecke 3 platziert; er könnte alternativ auch am Ende der Förderstrecke 3 angeordnet sein. Mittels des Roboters 20 können die beiden Paletten 52 nacheinander mit Stapeln 10 beladen werden; alternativ können die beiden Paletten 52 auch abwechselnd beladen werden. Es ist eine Steuereinrichtung 25 vorhanden, welche die Bewegungen 24 des Roboters 20 beim Umsetzen der Stapel 10 steuert.

Figur 2 zeigt eine erfindungsgemäße Vorrichtung 1 zum Anheben und Bewegen eines Stapels 10 übereinander liegender flacher Produkte. Der Stapel 10 weist eine nach oben hin zeigende Oberfläche 11 und eine Höhe (Ist-Höhe) 12 auf. Eine Greifeinrichtung 30 bzw. ein Greiferkopf 30 der Vorrichtung 1 umfasst ein Gehäuse 30a, ein unteres, erstes Greifelement 31, welches horizontal 70 bewegbar ist, und ein oberes, zweites Greifelement 33, welches vertikal 80 bewegbar ist; die Greifelemente 31 und 33 dienen dem Ergreifen und Halten/Klemmen je eines Stapels 10. Das Bewegen 32 des unteren Greifelement 31 erfolgt mittels eines steuerbaren Linearantriebs 31a, zum Beispiel eines Pneumatikzylinders. Das Bewegen 34 des oberen Greifelements 33 erfolgt mittels eines weiteren steuerbaren Linearantriebs 33a, zum Beispiel eines Pneumatikzylinders und bevorzugt einer pneumatischen Teleskopstange; besonders bevorzugt sind zwei, parallel arbeitende Linearantriebe 33a vorgesehen. Das untere Greifelement 31 ist ausschnittsweise auch in einer anderen Position 31b, zum Beispiel einer komplett ins Gehäuse 30a eingezogenen Position, gezeigt (gestrichelte Darstellung); in dieser Position wird kein Stapel 10 gehalten. Die Greifeinrichtung 30 umfasst auch zwei steuerbare Sauggreifer 36 zum Ansaugen, Halten und Transportieren von sogenannten Zwischenlagen für den Palettenstapel. Das Gehäuse 30a ist am Ende des Roboterarms 21 des Roboters 20 angeordnet, bevorzugt über Gelenke 22 drehbar und/oder schwenkbar.

Die Vorrichtung 1 umfasst wenigstens einen Sensor 40. Der Sensor 40 kann als ein Abstandssensor 40a ausgebildet sein und bevorzugt am Gehäuse 30a oberhalb des Stapels 10 angeordnet sein. Der Abstandssensor 40a misst einen Abstand 13 zur Oberfläche 11 des Stapels 10. Ist der Abstandssensor 40a in einer anderen Position 40c (gestrichelte Darstellung) angeordnet, so kann er auch den Abstand 14 zu einer Oberfläche 35 des zweiten Greifelements 33 bzw. einer Greifplatte messen (deren Abstand zur Oberfläche 11 während des Klemmens bekannt ist). Alternativ kann auch vorgesehen sein, den Abstand bzw. die Höhe 12 direkt über den Linearantrieb 33a bzw. dessen Steuerung 33b zu bestimmen, d. h. zum Beispiel über die Position des oberen Greifelements 33 im ausgefahrenen und klemmenden Zustand.

Der Sensor 40 kann alternativ als ein Näherungsschalter 40b ausgebildet sein und bevorzugt am Gehäuse 30a neben dem Stapel 10 angeordnet sein; bevorzugt in einer vertikalen Position auf der Höhe einer vorgegebenen Minimalhöhe 15 des Stapels 10.

Das Ergebnis der jeweiligen Messung, bzw. der gemessene Wert, kann an einen bevorzugt digitalen Rechner 41 übertragen werden (bevorzugt drahtlos, d. h. über die nur symbolisch dargestellte Funkverbindung), welcher Berechnungen ausführt und dabei die Ist-Höhe 12 des geklemmten Stapels 10 rechentechnisch ermittelt. Der Wert der Ist-Höhe 12 (oder daraus abgeleitet: ein Ist-Gewicht des Stapels 10) kann an die Steuereinrichtung 25 des Roboters 20 übermittelt werden. Auch kann eine Warneinrichtung 42 aktiviert werden, z.B. wenn aufgrund der gemessenen Ist-Höhe Probleme beim Ergreifen, Halten, Klemmen, Transportieren und/oder Absetzen erwartbar sind.

### Bezug Mist einen Abstandszeichenliste

- 1: Vorrichtung
- 2: Maschine, insbesondere Falzmaschine
- 3: Förderstrecke, insbesondere Rollentisch
- 4: Förderrichtung
- 5: Motor
- 10: Stapel übereinander liegender flacher Produkte
- 11: Oberfläche des Stapels
- 12: (Ist-) Höhe des Stapels
- 13: Abstand zur Oberfläche
- 14: Abstand zur Greifer
- 15: vorgegebene Minimalhöhe
- 20: Roboter/Robotersystem
- 21: Roboterarm
- 22: Gelenke
- 23: Gefahrenbereich
- 24: (Absetz-) Bewegung/-en
- 25: Steuereinrichtung des Roboters
- 30: Greifeinrichtung, Greiferkopf
- 30a: Gehäuse
- 31: (unteres) erstes Greifelement, horizontal bewegbar
- 31a: Linearantrieb
- 31b: erstes Greifelement in anderer Position
- 32: Bewegungsrichtung
- 33: (oberes) zweites Greifelement, vertikal bewegbar
- 33a: Linearantrieb
- 33b: Steuerung
- 34: Bewegungsrichtung
- 35: Oberfläche des zweiten Greifelements
- 36: Sauggreifer
- 37: Zwischenlage
- 40: Sensor
- 40a: Abstandsensor
- 40b: Näherungsschalter
- 40c: Sensor in anderer Position
- 41: Rechner
- 42: Warneinrichtung
- 50: Aufnahmeposition, bei der Förderstrecke
- 51: Absetzposition, bei der Palette
- 52: Palette/-n
- 53: Palettenstapel
- 60: Boden einer Produktionsstätte
- 61: Bedienperson
- 70: Horizontale
- 80: Vertikale

## Patentansprüche

1. Vorrichtung zum Anheben und Bewegen eines Stapels übereinander liegender flacher Produkte, mit einer robotergeführten Greifeinrichtung (30) wobei die Greifeinrichtung (30) ein unteres Greifelement (31), ein oberes Greifelement (33) und einen Sensor (40) umfasst,
**dadurch gekennzeichnet,**
**dass** das obere Greifelement (33) als Klemmelement ausgebildet ist, welches in Richtung zum unteren Greifelement (31) bewegbar ist, und dass der Sensor (40) als ein Abstandssensor (40) oder ein Näherungsschalter (40) ausgebildet ist, derart, dass unter Einsatz des Sensors (40) die Ist-Höhe (12) eines der Greifeinrichtung (30) gegriffenen und zwischen den Greifelementen (31, 33) geklemmten Stapels (10) bestimmt wird.

2. Verfahren nach Anspruch 1,
**dadurch gekennzeichnet,**
**dass** der Sensor (40) als Abstandssensor (40) ausgebildet ist, an der Greifeinrichtung (30) über einem gegriffenen Stapel (10) angeordnet ist und einen Abstand (13, 14) bestimmt.

3. Verfahren nach Anspruch 1,
**dadurch gekennzeichnet,**
**dass** das obere Greifelement (33) einen Linearantrieb (33a) umfasst, dass der Linearantrieb (33a) oder dessen Steuerung (33b) als der Abstandssensor (40) eingesetzt wird und dass der Linearantrieb (33a) oder dessen Steuerung (33b) einen Abstand (13, 14) bestimmt.

4. Verfahren nach einem der vorhergehenden Ansprüche,
**dadurch gekennzeichnet,**
**dass** der Abstandssensor (40) den Abstand (13, 14) an einen Rechner (41) übermittelt und dass der Rechner (41) aus dem Abstand (13, 14) die Ist-Höhe (12) des Stapels (10) berechnet.

5. Verfahren nach Anspruch 4,
**dadurch gekennzeichnet,**
**dass** die Ist-Höhe (12) mit einer Soll-Höhe des Stapels (10) auf eine Abweichung verglichen wird.

6. Verfahren nach Anspruch 4,
**dadurch gekennzeichnet,**
**dass** erfasst wird, ob die Ist-Höhe (12) geringer als eine vorgegebene Minimalhöhe (15) des Stapels (10) ist.

7. Verfahren nach Anspruch 4,
**dadurch gekennzeichnet,**
**dass** der Rechner (41) aus der Ist-Höhe (12) das Ist-Gewicht des Stapels (10) berechnet.

8. Verfahren nach Anspruch 7,
**dadurch gekennzeichnet,**
**dass** der Rechner (41) das Ist-Gewicht an eine Steuereinrichtung (25) des Roboters (20) übermittelt und die Steuereinrichtung (25) das Ist-Gewicht bei der Ausführung von Roboterbewegungen (24) berücksichtigt.

9. Verfahren nach Anspruch 1,
**dadurch gekennzeichnet,**
**dass** der Sensor (40) als Näherungsschalter (40) ausgebildet ist und an der Greifeinrichtung (30) neben einem gegriffenen Stapel (10) angeordnet ist.

10. Verfahren nach Anspruch 9,
**dadurch gekennzeichnet,**
**dass** der Näherungsschalter (40) infolge seiner Positionierung erfasst, ob die Ist-Höhe (12) geringer als eine vorgegebene Minimalhöhe (15) des Stapels (10) ist.
